# EUROPEAN PATENT SPECIFICATION

(11) **EP 4 192 706 B1**
(45) Date of publication and mention of the grant of the patent: **09.12.2026**
(21) Application number: 21762571.4
(22) Date of filing: 05.08.2021
(51) Int. Cl.: B60L 53/16

(54) **METHOD AND SYSTEM FOR TEMPERATURE REGULATION FOR A PORTABLE CHARGER**
VERFAHREN UND SYSTEM ZUR TEMPERATURREGELUNG FÜR EIN TRAGBARES LADEGERÄT
PROCÉDÉ ET SYSTÈME DE RÉGULATION DE TEMPÉRATURE POUR UN CHARGEUR PORTABLE

(30) Priority: 10.08.2020 US 202016989419
(43) Date of publication of application: 14.06.2023
(73) Proprietor: Webasto Charging Systems, Inc., Monrovia, CA 91016 (US)
(72) Inventor: SINGH, Varundeep, Monrovia, CA 91016 (US); GABRIELSSON, Peter, Monrovia, CA 91016 (US)
(74) Representative: Dehns
(86) International application number: PCT/US2021/044830
(87) International publication number: WO 2022/035688

(56) References cited:
- WO-A1-2013/132874
- WO-A1-2017/014643
- WO-A1-2018/105809
- JP-A1- WO2013 132 874
- US-A1- 2018 229 615
- US-A1- 2020 079 235

## Description

### CROSS-REFERENCE TO RELATED APPLICATION

This application claims the priority benefit of U.S. Non-Provisional Patent Application Serial Number 16/989,419 filed August 10, 2020.

### FIELD OF ENDEAVOR

Embodiments relate generally to portable chargers, and more particularly to temperature regulation for an AC plug.

### BACKGROUND

Electric vehicle supply equipment (EVSE) may be used to charge electric vehicles (EV) and may utilize standard AC utility power taken from a standard utility socket in the home or at other locations to draw power. An EVSE may include an EVSE case enclosing a power supply, controller and relays to accept utility power provided from a receptacle plug assembly and a power cord for selective communication of the power to a J1772 compliant connector.

WO 2017/014643 A1 discloses a charging system for charging an electric vehicle.

US 2020/0079235 A1 discloses a charging plug for a motor vehicle and a load contact module for charging a plug.

WO 2018/105809 A1 discloses a portable charger for an electric car.

WO 2013/132874 A1 discloses a charging cable.

US 2018/0229615 A1 discloses a thermal management of electric vehicle coupler contacts.

### SUMMARY

The invention is set out in the appended set of claims.

An AC plug system as defined by the invention includes: a first pair of redundant temperature sensors proximate a first plug; a second pair of redundant temperature sensors proximate a second plug; a first microcontroller connected to a plugsense line and a ground line, where the first microcontroller may be configured to receive temperature data from the first pair of redundant temperature sensors and the second pair of redundant temperature sensors; and a first switch configured to receive a data packet comprising temperature data from the first pair of redundant temperature sensors and the second pair of redundant temperature sensors, where the first switch transmits the data packet by lowering voltage in the plugsense line.

In additional system embodiments, a second microcontroller may be configured to generate a status signal. In additional system embodiments, a second switch may be configured to receive the status signal from the second microcontroller. In additional system embodiments, a first comparator may be connected to the plugsense line, where the first comparator may be configured to detect the status signal from the second switch as the voltage in the plugsense line may be lowered.

In additional system embodiments, the first comparator may be further configured to transmit the signal to the first microcontroller. In additional system embodiments, a second comparator may be connected to the plugsense line, where the second comparator may be configured to detect the data packet from the first switch as the voltage in the plugsense line may be lowered.

In additional system embodiments, the second comparator may be further configured to transmit the signal to the second microcontroller. In additional system embodiments, the second microcontroller may be further configured to determine if any temperature sensor of the first pair of redundant temperature sensors and the second pair of redundant temperature sensors may be stuck or open. In additional system embodiments, the second microcontroller may be further configured to reduce a charging current if the temperature in the data packet exceeds a threshold.

Additional system embodiments may further include: a gridcord and a charge circuit interrupting device (CCID), where the first pair of redundant temperature sensors, the second pair of redundant temperature sensors, the first microcontroller, the first switch, and the first comparator may be disposed in the gridcord, and where the second switch and the second comparator may be disposed in the CCID.

A method for an AC plug system as defined by the invention includes: receiving, by a first microcontroller connected to a plugsense line and a ground line, temperature data from a first pair of redundant temperature sensors and a second pair of redundant temperature sensors, where the first pair of redundant temperature sensors may be proximate a first plug, and where the second pair of redundant temperature sensors proximate a second plug; transmitting, by the first microcontroller a data packet comprising temperature data from the first pair of redundant temperature sensors and the second pair of redundant temperature sensors to a first switch; and transmitting, by the first switch the received data packet by lowering voltage in the plugsense line.

Additional method embodiments may include generating, by a second microcontroller, a status signal. Additional method embodiments may include receiving, by a second switch, the generated status signal from the second microcontroller. Additional method embodiments may include detecting, by a first comparator connected to the plugsense line, the status signal from the second switch as the voltage in the plugsense line may be lowered.

Additional method embodiments may include transmitting, by the first comparator, the detected signal to the first microcontroller. Additional method embodiments may include detecting, by a second comparator connected to the plugsense line, the data packet from the first switch as the voltage in the plugsense line may be lowered.

Additional method embodiments may include transmitting, by the second comparator, the detected signal to the second microcontroller. Additional method embodiments may include determining, by the second microcontroller, if any temperature sensor of the first pair of redundant temperature sensors and the second pair of redundant temperature sensors may be stuck or open. Additional method embodiments may include reducing, by the second microcontroller, a charging current if the temperature in the data packet exceeds a threshold.

Another system embodiment may include: a first pair of redundant temperature sensors proximate a first plug; a second pair of redundant temperature sensors proximate a second plug; a first microcontroller connected to a plugsense line and a ground line, where the first microcontroller may be configured to receive temperature data from the first pair of redundant temperature sensors and the second pair of redundant temperature sensors; a first switch configured to receive a data packet comprising temperature data from the first pair of redundant temperature sensors and the second pair of redundant temperature sensors, where the first switch transmits the data packet by lowering voltage in the plugsense line; a second microcontroller configured to generate a status signal; a second switch configured to receive the status signal from the second microcontroller; a first comparator connected to the plugsense line, where the first comparator may be configured to detect the status signal from the second switch as the voltage in the plugsense line may be lowered, where the first comparator may be further configured to transmit the signal to the first microcontroller; a second comparator connected to the plugsense line, where the second comparator may be configured to detect the data packet from the first switch as the voltage in the plugsense line may be lowered, where the second comparator may be further configured to transmit the signal to the second microcontroller, where the second microcontroller may be further configured to determine if any temperature sensor of the first pair of redundant temperature sensors and the second pair of redundant temperature sensors may be stuck or open, where the second microcontroller may be further configured to reduce a charging current if the temperature in the data packet exceeds a threshold.

### BRIEF DESCRIPTION OF THE DRAWINGS

The components in the figures are not necessarily to scale, emphasis instead being placed upon illustrating the principals of the invention. Like reference numerals designate corresponding parts throughout the different views. Embodiments are illustrated by way of example and not limitation in the figures of the accompanying drawings, in which:
FIG. 1 depicts a system for AC plug temperature regulation for portable charging solutions;
FIG. 2 depicts an AC plug of the system of FIG. 1;
FIG. 3 depicts a printable circuit board assembly associated with the AC plug of FIG. 2;

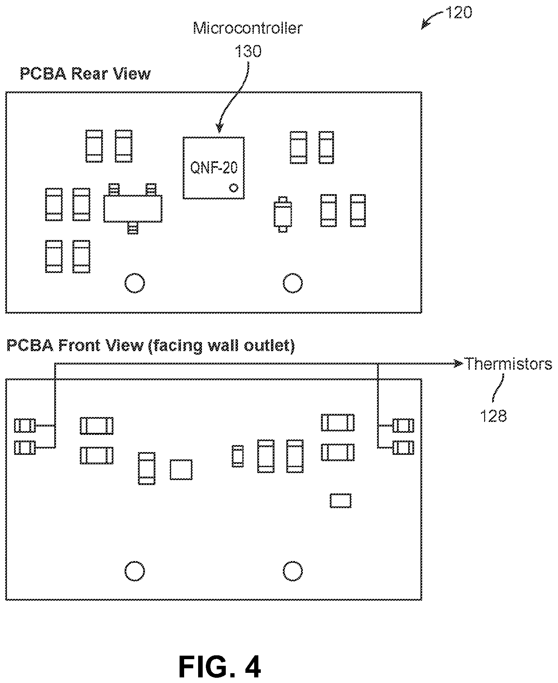

FIG. 4 depicts an alternative view of the printable circuit board assembly of FIG. 8;
FIG. 5 shows a high-level diagram of a computing device associated with the AC plug of FIG. 2;
FIG. 6 depicts the AC plug of FIG. 2 connected to a second printable circuit board assembly;
FIG. 7 shows a flow chart of a process for AC plug temperature regulation for portable charging solutions;
FIG. 8 shows a graph of an embodiment associated with the process of FIG. 7;
FIG. 9 shows a graph of an alternative embodiment associated with the process of FIG. 7;
FIG. 10 shows a flow chart of an alternative process for AC plug temperature regulation for portable charging solutions;
FIG. 11 shows a graph of an embodiment associated with the process of FIG. 15;
FIG. 12 shows a block diagram of one embodiment of a system for AC plug temperature regulation for portable charging solutions; and
FIG. 13 shows a high-level functional block diagram of a system for AC plug temperature regulation for portable charging solutions.

### DETAILED DESCRIPTION

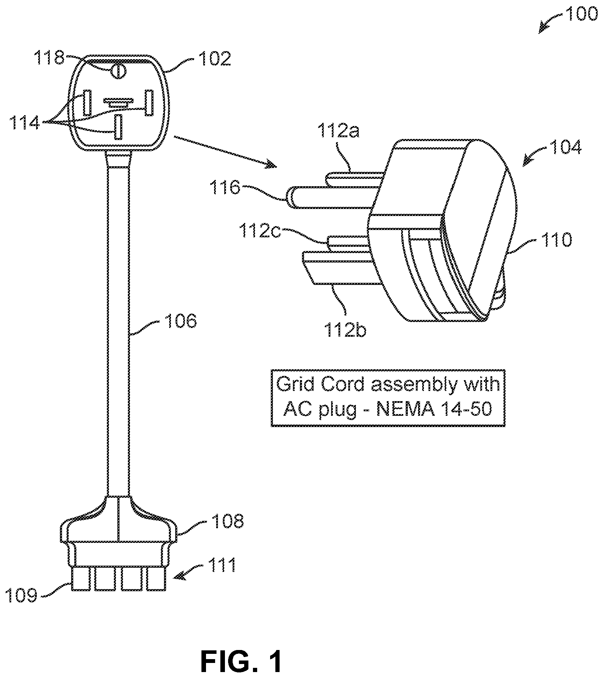

With respect to FIG. 1, a system 100 for alternating current (AC) plug temperature regulation for portable charging solutions is illustrated. The system 100 includes an AC utility socket 102, an AC utility plug 104 with a housing 110, and a cable 106 with a cable leader 108. Generally speaking, AC plugs and sockets connect electric equipment to the alternating current (AC) power supply in buildings, electrical vehicles, and at other sites. Electrical plugs and sockets may differ from one another in voltage and current rating, shape, size, and connector type. In one embodiment, the AC plug 104 may be a NEMA 14-50 plug. The maximum current provided in the system may be 32 Amps in some embodiments. In other embodiments, the maximum current provided in the system may be 50 Amps. The AC plug 104 may have three blades 112a,b,c and a pin 116. The plug 104 may be connected to the socket 104 by inserting the blades 112a,b,c into socket blade receivers 114 and inserting the pin 116 into a socket pin receiver 118.

In one embodiment, the system 100 provides for detecting adverse conditions (e.g., high temperatures) in AC plug charging equipment, such as Electric Vehicle Supply Equipment (EVSE). Upon detection of an onset of an adverse condition, an action may be taken. For example, a reduction in voltage and/or current may be imposed to avoid an adverse condition. Examples of adverse conditions are, but not limited to, damage or destruction of a car battery, damage or destruction of the EVSE, fire occurrence at the AC plug 104, and the like.

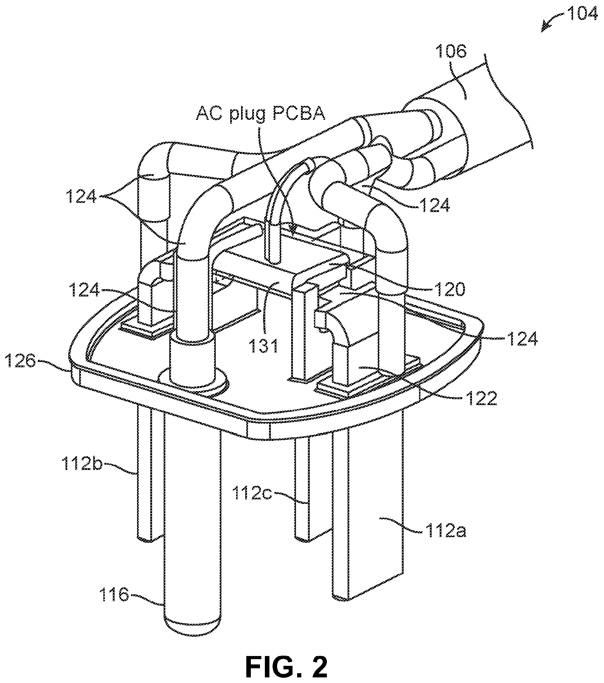

With respect to FIG. 2, the AC plug 104 is illustrated with the housing 110 of FIG. 1 removed to reveal the inner components of the AC plug 104 in more detail. The three blades 112a,b,c and the pin 116 may each be connected to a wire 124, the wires 124 running through the cable 116 and to the cable leader 108 for supplying power, protective earth, and communication. In one embodiment, the wires 124 have a protective sheath, such as rubber or plastic. In one embodiment, the AC plug 104 may be potted and contain a soft overmold overtop potting material.

In one embodiment, the plug 104 may have a printed circuit board assembly (PCBA) 120. The PCBA 120 may be connected to a pair of curved supports 122. The curved supports 122 may be associated with the blades 112a,b. The curved supports 122 may be attached to a base 126.

In one embodiment, a wall may extend from the perimeter of the base 126. In one embodiment, the wall allows for a push-fit attachment of the housing (110, FIG. 1) to the base 126. In one embodiment, each blade 112a,b and its accompanying curved support 122 may be secured in place with a latching mechanism.

More specifically, the base 126 is shown with the inner structure removed to highlight the latching mechanism. As each blade (112a,b,c, FIGS. 1-2) is inserted into an associated slot of the base 126, a pair of latches receive each respective blade and prevent each respective blade from further insertion. The latching mechanism may also have a root support mechanism to provide further structural support to the latching mechanism and support against over stress and even breakage of the latches. In one embodiment, the latching mechanism may have a central support structure to provide additional stiffness to the latching mechanism. In one embodiment, a substantial base support is disposed at the base of a pillar associated with each latch, where the latch is disposed at the top of the pillar. The base support provides additional support to the pillar to avoid stress concentration at the base of the pillar and possible breakage of the pillar. In one embodiment, the slot for receiving the blade 112c may have an additional support wall for the latching mechanism on the opposite side of the slot from the latching mechanism.

In one embodiment, the inner structure of the plug 104 may also have a support structure for the PCB (120, FIG. 2). The PCB may seat on a ledge of a pair of walls. The pair of walls may be supported by ribs, where the height of each rib runs perpendicular to the wall, providing support for the walls and keeping the walls from flexing inwards or outwards, or even breaking. Each wall may have an extension at one end of each wall extending the wall in height. The other end of each wall may taper inwardly toward a support pillar. Each support pillar may have an end portion.

Additionally, each support pillar end portion may be sized to fit just within an indentation of the PCB 120. The PCB 120 may be seated securely in the support structure with the end portion friction fit to the indentations of the PCB 120. The placement of the end portions in the indentations may help prohibit any side to side movement of the PCB 120. Furthermore, the support pillars with the end portions and the extensions of the walls sandwich the PCB 120 thus further securing the PCB in place.

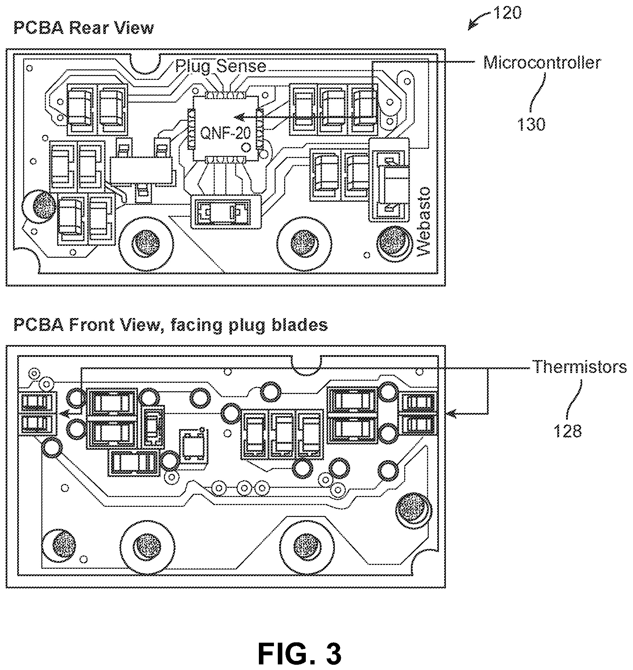

With respect to FIG. 3, the front facing (or wall outlet facing) side of the PCBA 120 is shown in the bottom panel and includes 4 thermistors 128. The PCBA 120 may be seated in such a way that there is a minimum specified contact gap between the blades 112a,b,c and thermistors 128. In one embodiment, the minimum contact gap for electrical isolation is 1mm. In one embodiment, the thermistors 128 are located near the outer edges of the PCBA 120 in order to be in close contact with the blades 112a,b. Additionally, the PCBA 120 may be encapsulated by an insulation jacket (131, FIG. 2) to prevent the PCBA 120 from becoming damaged during the potting process.

In one embodiment, the thermistors 128 may be electrical resistors whose resistance is significantly reduced by heating. Generally speaking, thermistors 128 are temperature sensors that may be used for temperature measurement and control. In one embodiment, the thermistors 128 are negative temperature coefficient (NTC) thermistors. With an NTC thermistor, resistance decreases as temperature rises. NTC thermistors are commonly used as a temperature sensor, or in series with a circuit as an inrush current limiter. In one embodiment, thermistors 128 are made of ceramic or polymer material, or a semiconducting material.

In one embodiment, the current passing through the AC plug 104 may be regulated based on temperature using two thermistors 128 per blade 112a,b. This regulated current may allow for redundancy in the event that one of the thermistors 128 is damaged or malfunctions, as will be discussed in further detail below. The regulated current may further allow for fault detection of the AC plug 104, such that if the two thermistors 128 per blade 112a,b register different temperature values, then one of the thermistors 128 is likely damaged. In one embodiment, upon detection of the different temperature values, the AC plug 104 may go into a lower power or "limp" mode, thus still providing some charge to a user.

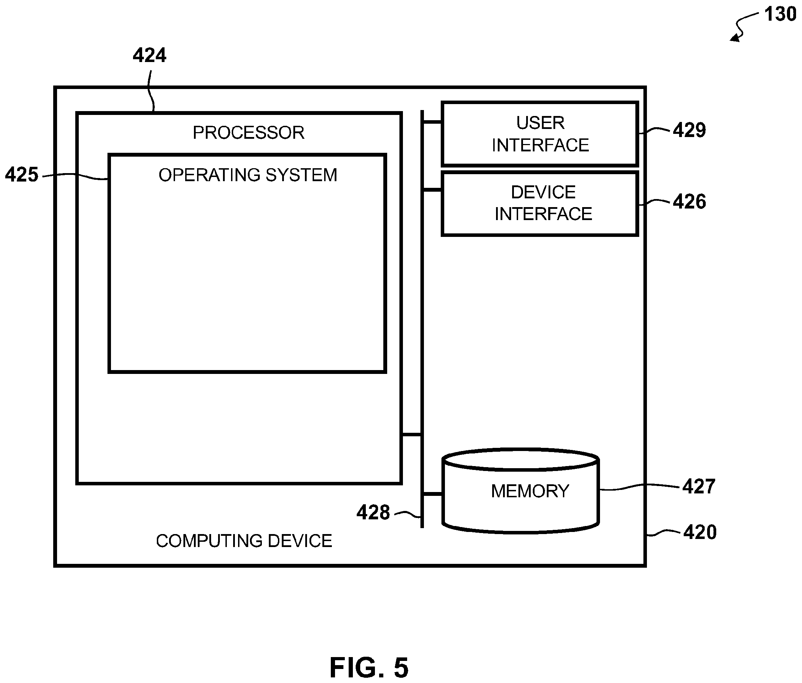

The rear facing side of the PCBA 120 is shown in the top panel of FIG. 3 and includes a microcontroller 130. With respect to FIG. 5, an example of a top-level functional block diagram of the microcontroller 130 is shown comprising a processor 424, such as a central processing unit (CPU), addressable memory 427, an external device interface 426, e.g., an optional universal serial bus port and related processing, and/or an Ethernet port and related processing, and an optional user interface 429, e.g., an array of status lights and one or more toggle switches, and/or a display, and/or a keyboard and/or a pointer-mouse system and/or a touch screen. Optionally, the addressable memory may, for example, be: flash memory, eprom, and/or a disk drive or other hard drive. These elements may be in communication with one another via a data bus 428. In some embodiments, the processor 424 may be configured to execute steps of a process to communicate temperature readings from the thermistors 128 to a second PCBA 132, as described below. In one embodiment, the form factor of the PCBA microcontroller 130 motherboard may provide for the single PCBA 120 to be integrated into a wide variety of plugs, such as a 20 Amp plug or a 50 Amp plug.

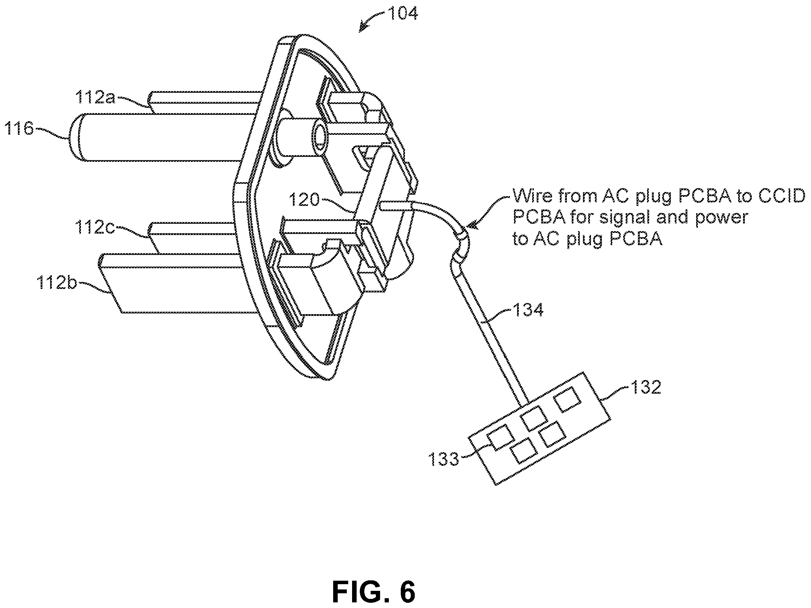

With respect to FIG. 6, the current passing through the AC plug 104 may be regulated based on temperature using two thermistors 128 for blade 112a and two thermistors 128 for blade 112b. The temperature may be communicated with the processor 424 to the PCBA 132. In one embodiment, the PCBA 132 is a charge circuit interrupting device (CCID) via a wire 134 partially housed in the cable 106 (see FIG. 1). The wire 134 may be connected from the AC plug PCBA 120 to the second PCBA 132 and may be configured to function both as a signal and a power line for the AC plug PCBA 120. With respect to FIG. 1, the cable leader 108 of the cable 106 includes an interface 111 to the CCID PCBA 132. The interface 111 may include a plurality of pins 109. In one embodiment, the interface 111 may have four pins 109. In one embodiment, one of the pins 109 may provide for communication and power to the PCBA 132. More specifically, the PCBA 120 transmits power and communication via the wire 134 to a pin 109 of the interface 111 and on to the PCBA 132.

The PCBA 132 may be a standard USB protocol that allows a smartcard to be connected to a computer via a card reader using a standard USB interface, without the need for each manufacturer of smartcards to provide its own reader or protocol. The PCBA 132 may determine the current allowed based on a temperature regulation algorithm, and the difference in temperature between the two thermistors 128 on the two blades 112a,b may be used to determine faults/malfunctions between the thermistors 128. The PCBA 132 may have a plurality of sensors 133. In one embodiment, sensors 133 include: an ambient/PCBA temperature sensor, two relay temperature sensors, and two input temperature sensors.

At detected high temperatures, a reduction in voltage and/or current is desired in order to avoid an adverse condition. Generally speaking, de-rating of an electronic system, such as system 100 of FIG. 1 is the operation of that system at less than the system's rated maximum capacity in order to prolong the lifetime of the device, such as operation below the maximum current rating. More specifically, "foldback" is a de-rating current limiting feature (e.g., a form of temperature-based current regulation) of power supplies and power amplifiers for such temperature fault handling. In the event that a load attempts to draw overcurrent from the supply, foldback may reduce both the output voltage and current to values well below the normal operating limits. Foldback may provide for maintaining current output within a safe operating range without having to terminate the current entirely. Foldback may also significantly reduce the power dissipation in the load in fault conditions, which may reduce the risks of fire and heat damage.

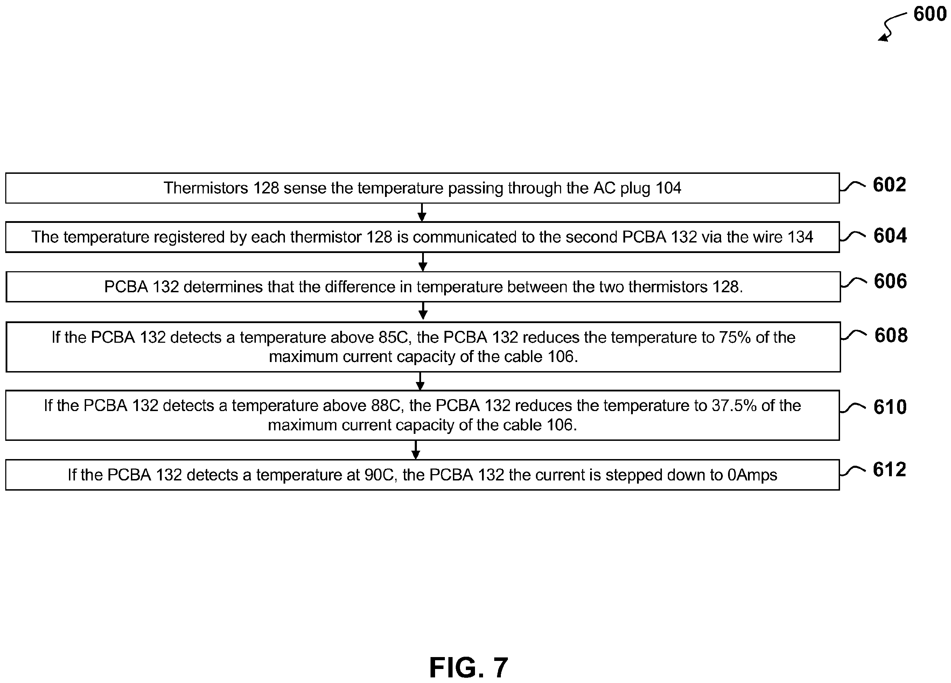

With respect to FIG. 7, a stepped foldback de-rating method 600 is applied for detecting and resolving adverse conditions in an AC plug system, such as AC plug system 100 is illustrated. At step 602, thermistors 128 sense the temperature passing through the AC plug 104. At step 604, the temperature registered by each thermistor 128 is communicated to the PCBA 132 via the wire 134. At step 606, the PCBA 132 may determine that the difference in temperature between the two thermistors 128 on the two blades 112a,b may correspond to a current that exceeds an optimal threshold. At step 608, if the PCBA 132 detects a temperature above 85C, the PCBA 132 reduces the current to 75% of the maximum current capacity of the cable 106. At step 610, if the PCBA 132 detects a current above 88C, the PCBA 132 reduces the current to 37.5% of the maximum current. At step 610, if the PCBA 132 detects a temperature at 90C, the PCBA 132 reduces the current down to 0 Amps.

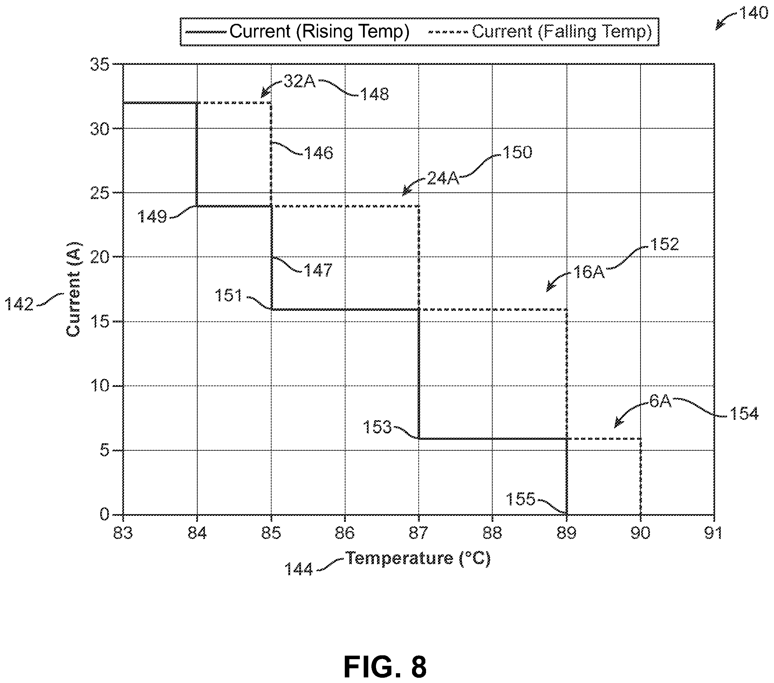

With respect to FIG. 8, a graph 140 shows an example of temperature fault handling with the stepped foldback de-rating method 600 for a system, such as system 100 of FIG. 1. In this example, the system may handle a maximum current capacity of the cable 106 rated between 32 Amps and 17 Amps. Graph 140 depicts the current measured in Amps on a y-axis 142 versus the temperature measured in degrees C on an x-axis 144. A first curve 146 depicts how the current of the system is dropped down when a given temperature threshold is exceeded. A second curve 147 depicts how the current of the system is increased when the temperature of the system decreases back down below a given temperature threshold. For example, if the PCBA 132 detects a temperature greater than or equal to 85C, the PCBA 132 steps the current down to 24 Amps from 32 Amps, as shown at a point 148 on the curve 146. If the PCBA 132 detects that the temperature of the system has then dropped to less than or equal to 84C, the PCBA 132 steps the current back up to the maximum allowed 32 Amps, as shown at a point 149 on the curve 147. If the PCBA 132 detects that the temperature continues to rise to a temperature greater than or equal to 87C, the PCBA 132 steps the current down to 16 Amp from 24 Amps, as shown at a point 150 on the curve 146. If the PCBA 132 detects that the temperature of the system has dropped to less than or equal to 85C, the PCBA 132 steps the current back up to 24 Amps from 16 Amps, as shown at a point 151 on the curve 147. If the PCBA 132 detects that the temperature continues to rise to a temperature greater than or equal to 89C, the PCBA 132 steps the current down to 6 Amps from 16 Amps, as shown at a point 152 on the curve 146. If the PCBA 132 detects that the temperature of the system has dropped to less than or equal to 89C, the PCBA 132 steps the current back up to 16 Amps from 6 Amps, as shown at a point 153 on the curve 147. If the PCBA 132 detects that the temperature continues to rise to a temperature greater than or equal to 90C, the PCBA 132 steps the current down to 0 Amps from 6 Amps, as shown at a point 154 on the curve 146. If the PCBA 132 detects that the temperature of the system has dropped to less than or equal to 89C, the PCBA 132 steps the current back up to 6 Amps from 0 Amps, as shown at a point 155 on the curve 147.

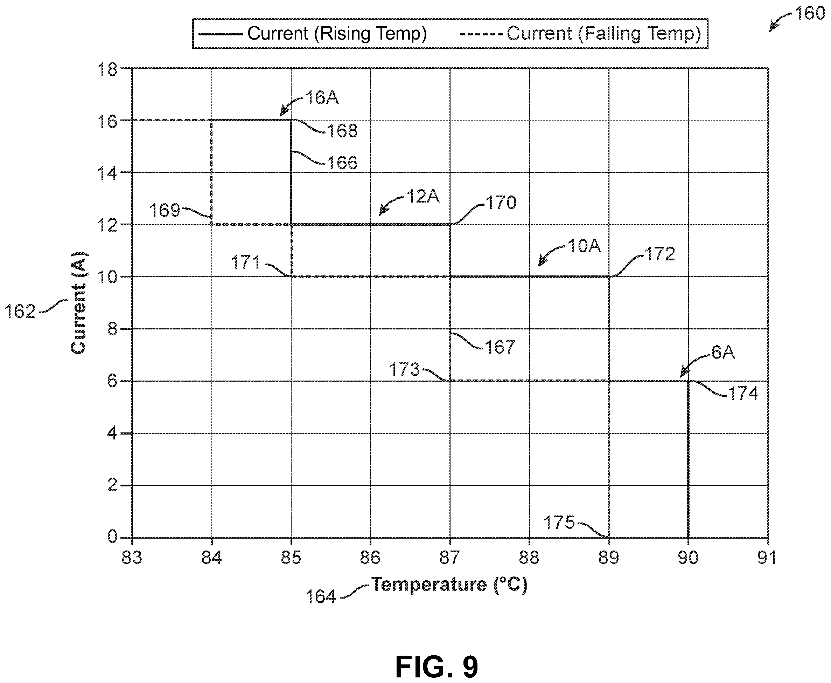

With respect to FIG. 9, a graph 160 shows an alternative example of temperature fault handling with the stepped foldback de-rating method 600 for a system, such as system 100 of FIG. 1. In this example, the system may handle a maximum current capacity of the cable 106 rated up to 16 Amps. Graph 160 depicts the current measured in Amps on a y-axis 162 versus the temperature measured in degrees C on an x-axis 164. A first curve 166 depicts how the current of the system is dropped down when a given temperature threshold is exceeded. A second curve 167 depicts how the current of the system is increased when the temperature of the system decreases back down below a given temperature threshold. For example, if the PCBA 132 detects a temperature greater than or equal to 85C, the PCBA 132 steps the current down to 12 Amps from 16 Amps, as shown at a point 168 on the curve 166. If the PCBA 132 detects that the temperature of the system has dropped to less than or equal to 84C, the PCBA 132 steps the current back up to the maximum allowed 16 Amps from 12 Amps, as shown at a point 169 on the curve 167. If the PCBA 132 detects that the temperature continues to rise to a temperature greater than or equal to 87C, the PCBA 132 steps the current down to 10 Amps from 12 Amps, as shown at a point 170 on the curve 146. If the PCBA 132 detects that the temperature of the system has dropped to less than or equal to 85C, the PCBA 132 steps the current back up to 12 Amps from 10 Amps, as shown at a point 171 on the curve 167. If the PCBA 132 detects that the temperature continues to rise to a temperature greater than or equal to 89C, the PCBA 132 steps the current down to 6 Amps from 10 Amps, as shown at a point 172 on the curve 166. If the PCBA 132 detects that the temperature of the system has dropped to less than or equal to 89C, the PCBA 132 steps the current back up to 10 Amps from 6 Amps, as shown at a point 173 on the curve 167. If the PCBA 132 detects that the temperature continues to rise to a temperature greater than or equal to 90C, the PCBA 132 steps the current down to 0 Amps from 6 Amps, as shown at a point 174 on the curve 166. If the PCBA 132 detects that the temperature of the system has dropped to less than or equal to 89C, the PCBA 132 steps the current back up to 6 Amps from 0 Amps, as shown at a point 175 on the curve 167.

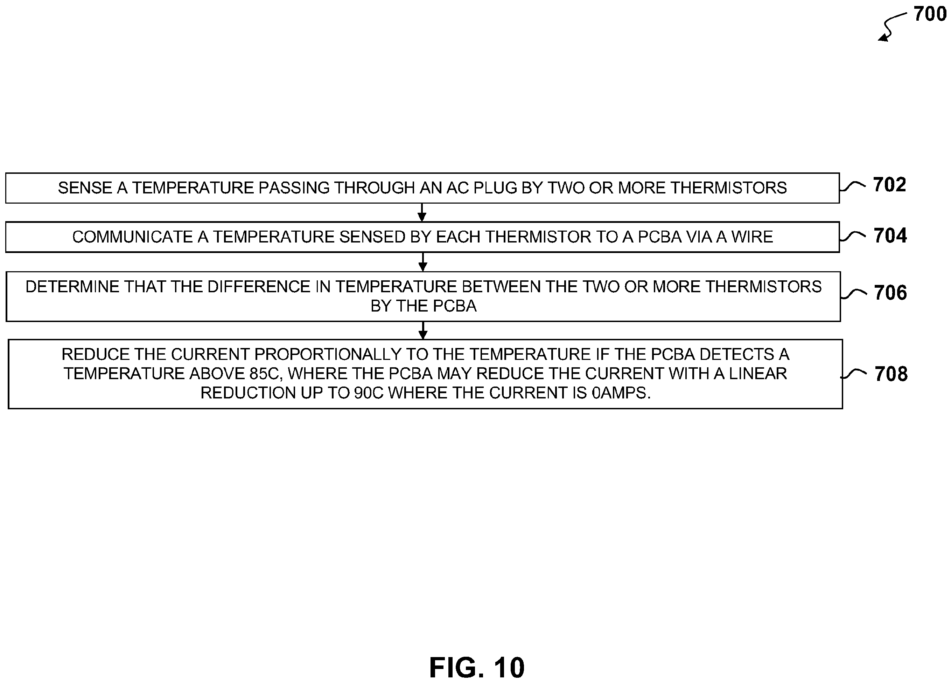

With respect to FIG. 10, a linear foldback de-rating method 700 is applied for detecting and resolving adverse conditions in an AC plug system, such as AC plug system 100 is illustrated. At step 702, thermistors 128 sense the temperature passing through the AC plug 104. At step 704, the temperature registered by each thermistor 128 is communicated to the PCBA 132 via the wire 134. At step 706, the PCBA 132 may determine that the difference in temperature between the two thermistors 128 on the two blades 112a,b may correspond to a current that exceeds an optimal threshold. At step 708, if the PCBA 132 detects a temperature above 85C, the PCBA 132 may reduce the current proportionally to the temperature with a linear reduction up to 90C where the current is 0 Amps.

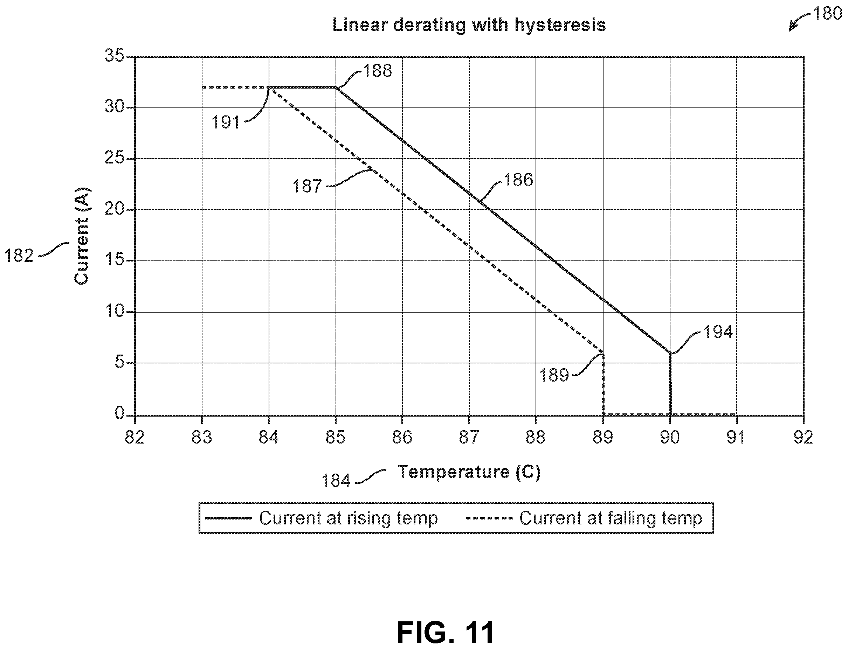

With respect to FIG. 11, a graph 180 shows an alternative example of temperature fault handling with the linear foldback de-rating method 700 for a system, such as system 100 of FIG. 1. In this example, the system may handle a maximum current capacity of the cable 106 rated up to 32 Amps. Graph 180 depicts the current measured in Amps on a y-axis 182 versus the temperature measured in degrees C on an x-axis 184. A first curve 186 depicts how the current of the system is linearly decreased when a given temperature threshold is exceeded. If the PCBA 132 detects a temperature above 85C at a point 188, the PCBA 132 may reduce the current proportionally to the temperature with a linear reduction down to a current of 6 Amps and a temperature up to 90C at a point 194. If the temperature exceeds 90C, the current is dropped to 0 Amps. A second curve 187 depicts how the current of the system is linearly increased when the temperature drops below a given temperature threshold. If the PCBA 132 detects a temperature below or at 90C at a point 189, the PCBA 132 may increase the current from 6 Amps (at a point 189) proportionally to the temperature, with a linear increase to a current of 32 Amps and a temperature down to 84C at a point 191. If the temperature exceeds 90C, the current is 0 Amps.

In one embodiment, and with respect to the methods described above, temperature fault handling either by stepped foldback de-rating method 600 or linear foldback de-rating method 700 may commence when any of the temperature sensors, such as thermistors 128 of PCBA 120 and sensors 133 of PCBA 132 sense a temperature of 90C or above. In another embodiment, temperature fault handling may begin when any of the sensors 133 is missing and/or any of the thermistors 128 is missing. In another embodiment, temperature fault handling may begin when the temperature difference between the thermistors 128 on the two blades 112a,b exceeds 12C.

The system 100 recovers from a temperature fault when all temperature sensors (e.g., thermistors 128 and sensors 133) detect a temperature below 90C. After the recovery, the current de-rate logic may control the maximum current allowed. A maximum of 3 temperature fault recoveries occurs during a power session, after which the recovery occurs manually.

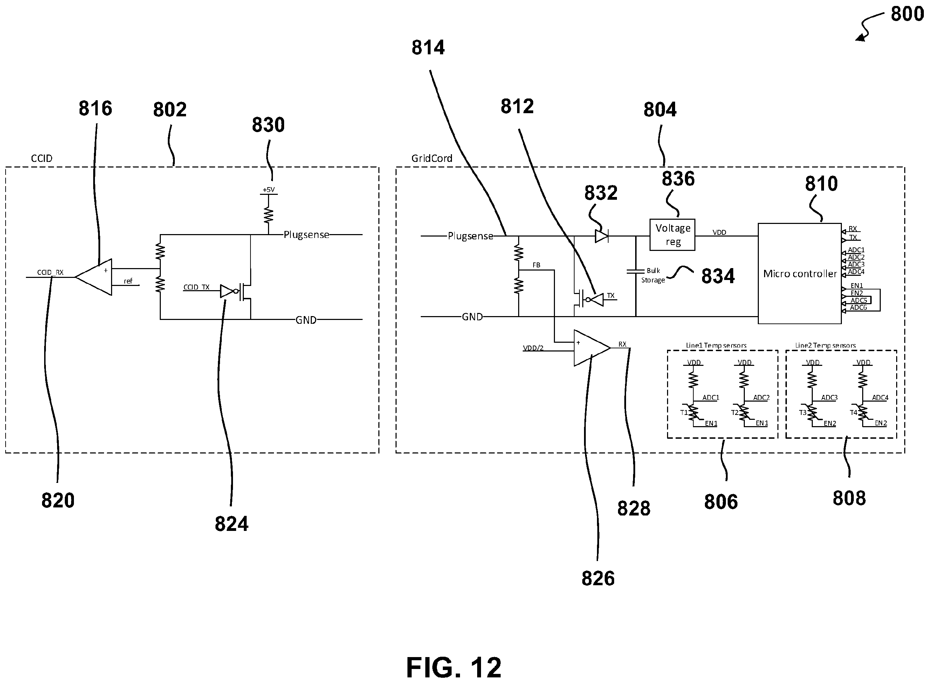

FIG. 12 shows a block diagram of the system 800 for AC plug temperature regulation for portable charging solutions. The gridcord 804 includes components in a plug that is attached to a power source, such as a power outlet in a wall. The gridcord 804 is in communication with and supplies power to the charge circuit interrupting device (CCID) 802. The CCID 802 is in the electric vehicle charging supply equipment that supplies power to an electric vehicle.

The gridcord 804 includes redundant temperature sensors for the line 1 plug blade 806 and redundant temperature sensors for the line 2 plug blade 808. Each contact includes two temperature sensors. Redundant sensors allow for the detection of an open or stuck temperature sensors. Readings from each of the redundant temperature sensors can be compared to one another to confirm whether each sensor reports the same, or a similar, value. If the values are not the same, or similar, then the system may determine a fault in one of the temperature sensors. T1, T2, T3, T4 are shown as the temperature sensors. A voltage divider from these temperature sensors is output as ADC1, ADC2, ADC3, and ADC4 and received by the microcontroller 810.

Input/output (IO) pins enable 1 (EN1) and enable 2 (EN2) may be enabled and/or disabled by the microcontroller 810 to determine whether the temperature sensors T1, T2, T3, T4 are operating correctly and are not stuck or open circuits. EN1 and EN2 may be set to 0V or ground and the sensors T1, T2, T3, T4 are enabled. EN1 and EN2 may be set to 3.3V or high and the sensors T1, T2, T3, T4 are disabled.

In some embodiments, the microcontroller 810 operates over serial communication with a receive line RX and a transmit line TX. The transmit line may be connected to a metal-oxide-semiconductor field-effect transistor (MOSFET) 812. In some embodiments, the MOSFET 812 may be any switching device receiving an output from the microcontroller 810. In some embodiments the MOSFET 812 may be a bipolar junction transistor (BJT). When the MOSFET is turned on it pulls down the plugsense line 814 voltage. A comparator 816 in the CCID 802 detects the voltage drop on the plugsense line 814. When the voltage drop is detected by the comparator 816, the comparator 816 sends a signal on a receive line of the CCID CCID_RX 820, which may be received by a microcontroller of the CCID.

The microcontroller of the CCID may transmit a signal via the CCID_TX line to a CCID MOSFET 824 or other switch. In some embodiments the CCID MOSFET 824 may be a bipolar junction transistor (BJT). The transmitted signal may be detected by a comparator 826 of the gridcord 804 and a corresponding receive RX signal 828 may be sent to the microcontroller 810 of the gridcord 804.

When no transmissions are occurring, the plugsense line 814 may be pulled high via a power source 830, which supplies power to the grid cord 804. Power from the power source 830 passes through diode 832 and charges a bulk storage 834, which may be a capacitor, up to 5V. A voltage regulator 836 regulates the voltage from 5V down to what voltage is required by the microcontroller 810, such as 3.3V. When not communicating, the microcontroller 810 receives power from the power source 830. When communicating, communication is done in very short bursts and power to the microcontroller 810 is provided via the bulk storage capacitor 834.

The microcontroller of the CCID 802 sends a status signal to the microcontroller 810 of the gridcord 804. In response to the status signal, the microcontroller 810 of the gridcord transmits a temperature back to the microcontroller of the CCID 802. In one embodiment, the microcontroller 810 of the gridcord 804 may transmit four temperature readings corresponding to the four temperature sensors. T1, T2, T3, T4. The microcontroller of the CCID 802 may determine if the temperature readings are valid, e.g., that a temperature controller is not stuck in an open position. If the temperature readings are over a first set threshold, such as 90C, then the charging current may be reduced. If the temperature readings are over a second set threshold, then the charging may be stopped. In some embodiments, temperature readings may be checked once per second. Other timing is possible and contemplated.

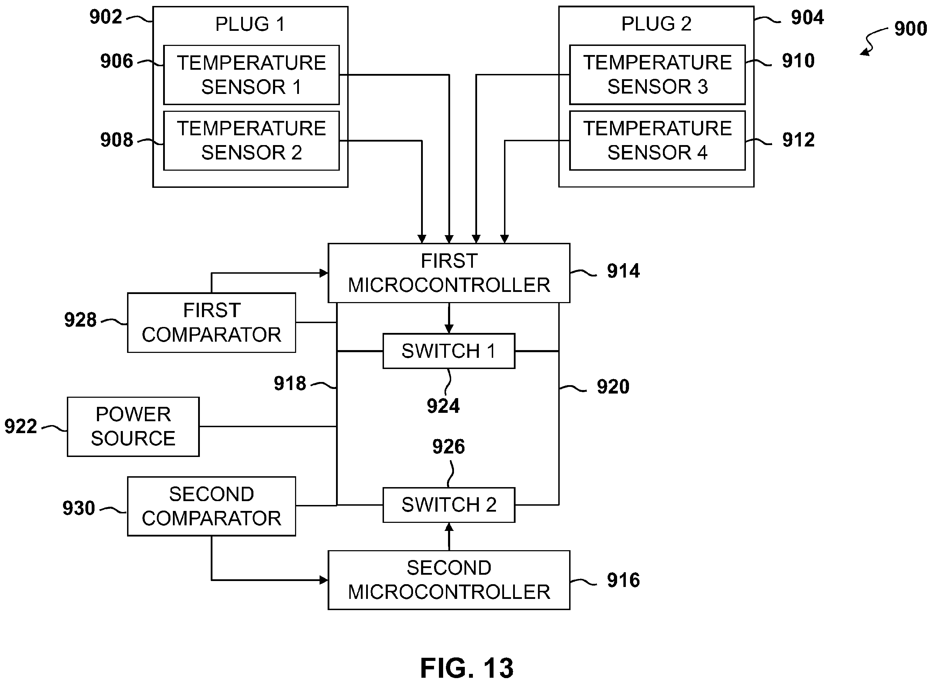

FIG. 13 shows a high-level functional block diagram of a system 900 for AC plug temperature regulation for portable charging solutions. The system may include redundant first and second temperature sensors 906, 908 proximate a first plug 902 and redundant third and fourth temperature sensors 910, 912 proximate a second plug 904. A first microcontroller 914 may receive a temperature reading from the first temperature sensor 906, the second temperature sensor 908, the third temperature sensor 910, and the fourth temperature sensor 912. In some embodiments, the first microcontroller 914 may be disposed in a gridcord (See FIG. 12), such as a plug that is connected to a power such, such as an outlet in a wall.

The first microcontroller 914 may be connected to a plugsense line 918 and a ground line 920. The first microcontroller 914 may receive power from a power source 922 such as a 5V power source. In some embodiments, the first microcontroller 914 may receive power via a voltage regulator, such as a voltage regulator that converts 5V from the power source 922 to 3.3V required by the microcontroller. In some embodiments, the first microcontroller 914 may receive power from a power storage, such as a capacitor that is charged by the power source 922.

The second microcontroller 916 is disposed proximate a charge circuit interrupting device (CCID). The second microcontroller sends a status signal to a second switch 926. The status signal is a request for the temperature readings of the four temperature sensors 906, 908, 910, 912. The second switch 926 turns on and off to transmit a binary signal. As the second switch 926 is turned on, the voltage level at the plugsense line 918 is lowered.

The first comparator 928 detects the changes in the voltage level of the plugsense line 918 and outputs a signal that is received by the first microcontroller 914. The first microcontroller 914 receives the status signal from the second microcontroller 916 via the detected voltage changes in the plugsense line 918 by the first comparator 928.

In response to the received status signal, the first microcontroller sends a data packet to a first switch 924. The data packet is a binary data packet. The data packet is transmitted by turning the first switch 924 on and off. As the first switch 924 is turned on, the voltage level at the plugsense line 918 is lowered.

The second comparator 930 detects the changes in the voltage level of the plugsense line 918 and outputs a signal that is received by the second microcontroller 916. The second microcontroller 916 receives the data packet from the first microcontroller 914 via the detected voltage changes in the plugsense line 918 by the second comparator 930. The second microcontroller 916 determines if the data packet containing temperature readings from the four temperature sensors 906, 908, 910, 912 contains a reading from a temperature sensor that is stuck open. The second microcontroller 916 determines that a temperature sensor is stuck open or not operating correctly if the other sensor of the redundant sensor pair has a very different temperature reading. The second microcontroller 916 then determines if the temperature readings are above a set threshold. The set threshold is 90 degrees Celsius. If the temperature readings exceed the set threshold, then the second microcontroller 916 reduces a charging current.

The data packet is a binary data packet containing temperature data. In some embodiments, the system 900 may use a serial communication protocol, such as RS-232. In some embodiments, the first switch 924 and the second switch 926 may be a metal-oxide-semiconductor field-effect transistor (MOSFET). In other embodiments, the first switch 924 and the second switch 926 may be any switching device receiving an output from the first microcontroller 914 and the second microcontroller 916, respectively. In other embodiments, the first switch 924 and the second switch 926 may be a bipolar junction transistor (BJT).

It is contemplated that various combinations and/or sub-combinations of the specific features and aspects of the above embodiments may be made. Accordingly, it should be understood that various features and aspects of the disclosed embodiments may be combined with or substituted for one another. Further, it is intended that the present invention is herein disclosed by way of examples.

## Claims

1. An AC plug system (100) comprising:
a first pair of redundant temperature sensors (906, 908) proximate a first plug (902);
a second pair of redundant temperature sensors (910, 912) proximate a second plug (904);
a first microcontroller (914) connected to a plugsense line (918) and a ground line (920), wherein the first microcontroller (914) is configured to receive temperature data from the first pair of redundant temperature sensors (906, 908) and the second pair of redundant temperature sensors (910, 912); and
a first switch (924) configured to receive a data packet comprising temperature data from the first pair of redundant temperature sensors (906, 908) and the second pair of redundant temperature sensors (910, 912), wherein the first switch transmits the data packet by lowering voltage in the plugsense line (918), wherein the data packet is a binary data packet containing temperature data, wherein the data packet is transmitted by turning the first switch (924) on and off, wherein as the first switch (924) is turned on, the voltage level at the plugsense line (918) is lowered,
a gridcord (804) that includes components in the plug (902, 904) that is attached to a power source, wherein the gridcord (804) is in communication with and supplies power to a charge circuit interrupting device (CCID) (802),
a second microcontroller (916) being configured to receive the data packet from the first microcontroller (914) via the detected voltage changes in the plugsense line (918) by a second comparator (930), wherein the second microcontroller (916) is configured to determine if the data packet containing temperature readings from the four temperature sensors (906, 908, 910, 912) contains a reading from a temperature sensor (906, 908, 910, 912) that is stuck or open if the other temperature sensor (906, 908, 910, 912) of the redundant temperature sensor pair (906, 908, 910, 912) has a different temperature reading, wherein the second microcontroller (916) is configured to determine then if the temperature readings are above a set threshold of 90°C, being configured to reduce a charging current, if the temperature readings exceed the set threshold,
**characterized in that**
the system (100) being configured to recover from a temperature fault when all temperature sensors (906, 908, 910, 912) detect a temperature below 90°C, wherein a maximum of 3 temperature fault recoveries occurs during a power session after which the recovery occurs manually.

2. The system of claim 1, further comprising:
the second microcontroller (916) configured to generate a status signal.

3. The system of claim 2, further comprising:
a second switch (926) configured to receive the status signal from the second microcontroller (916).

4. The system of claim 3, further comprising:
a first comparator (928) connected to the plugsense line (918), wherein the first comparator (928) is configured to detect the status signal from the second switch as the voltage in the plugsense line (918) is lowered, wherein the second switch (926) turns on and off to transmit the binary signal, wherein as the second switch (926) is turned on, the voltage level at the plugsense line (918) is lowered.

5. The system of claim 4, wherein the first comparator is further configured to transmit the signal to the first microcontroller (914).

6. The system of claim 5, further comprising:
the second comparator (930) connected to the plugsense line (918), wherein the second comparator (930) is configured to detect the data packet from the first switch as the voltage in the plugsense line (918) is lowered.

7. The system of claim 6, wherein the second comparator is further configured to transmit the signal to the second microcontroller (916).

8. The system of claim 6, wherein the first pair of redundant temperature sensors (906 908), the second pair of redundant temperature sensors (910, 912), the first microcontroller (914), the first switch (924), and the first comparator (928) are disposed in the gridcord, and wherein the second switch (926) and the second comparator (930) are disposed in the CCID.

9. A method for an AC plug system (100) according to claims 1-8 comprising:
receiving, by a first microcontroller (914) connected to a plugsense line (918) and a ground line (920), temperature data from a first pair of redundant temperature sensors (906, 908) and a second pair of redundant temperature sensors (910, 912), wherein the first pair of redundant temperature sensors (906, 908) are proximate a first plug (902), and wherein the second pair of redundant temperature sensors (910, 912) are proximate a second plug (904);
transmitting, by the first microcontroller (914), a data packet comprising temperature data from the first pair of redundant temperature sensors (906, 908) and the second pair of redundant temperature sensors (910, 912) to a first switch (924); and
transmitting, by the first switch (924), the received data packet by lowering voltage in the plugsense line (918), wherein the data packet is a binary data packet containing temperature data, wherein the data packet is transmitted by turning the first switch (924) on and off, wherein as the first switch (924) is turned on, the voltage level at the plugsense line (918) is lowered,
receiving by a second microcontroller (916) the data packet from the first microcontroller (914) via the detected voltage changes in the plugsense line (918) by a second comparator (930),
determining by the second microcontroller (916) if the data packet containing temperature readings from the four temperature sensors (906, 908, 910, 912) contains a reading from a temperature sensor (906, 908, 910, 912) that is stuck or open if the other temperature sensor (906, 908, 910, 912) of the redundant temperature sensor pair (906, 908, 910, 912) has a different temperature reading, wherein the second microcontroller (916) then determines if the temperature readings are above a set threshold of 90°C,
reducing by the second microcontroller (916) a charging current, if the temperature readings exceed the set threshold value,
**characterized by,**
recovering from a temperature fault when all temperature sensors (906, 908, 910, 912) detect a temperature below 90°C, wherein a maximum of 3 temperature fault recoveries occur during a power session after which the recovery occurs manually.

10. The method of claim 9, further comprising:
generating, by the second microcontroller (916), a status signal.

11. The method of claim 10, further comprising:
receiving, by a second switch (926), the generated status signal from the second microcontroller (916).

12. The method of claim 11, further comprising:
detecting, by a first comparator (928) connected to the plugsense line (918), the status signal from the second switch as the voltage in the plugsense line (918) is lowered, wherein the second switch (926) turns on and off to transmit the binary signal, wherein as the second switch (926) is turned on, the voltage level at the plugsense line (918) is lowered.

13. The method of claim 12, further comprising:
transmitting, by the first comparator, the detected signal to the first microcontroller (914).

14. The method of claim 9, further comprising:
transmitting, by the second comparator, the detected signal to the second microcontroller (916).

## Patentansprüche

1. Wechselstromsteckersystem (100), umfassend:
ein erstes Paar redundanter Temperatursensoren (906, 908) in der Nähe eines ersten Steckers (902);
ein zweites Paar redundanter Temperatursensoren (910, 912) in der Nähe eines zweiten Steckers (904);
einen ersten Mikrocontroller (914), der mit einer Plugsense-Leitung (918) und einer Masseleitung (920) verbunden ist, wobei der erste Mikrocontroller (914) so ausgebildet ist, dass er Temperaturdaten von dem ersten Paar redundanter Temperatursensoren (906, 908) und dem zweiten Paar redundanter Temperatursensoren (910, 912) empfängt; und
einen ersten Schalter (924), der so ausgebildet ist, dass er ein Datenpaket empfängt, das Temperaturdaten von dem ersten Paar redundanter Temperatursensoren (906, 908) und von dem zweiten Paar redundanter Temperatursensoren (910, 912) umfasst, wobei der erste Schalter das Datenpaket durch Absenken der Spannung in der Plugsense-Leitung (918) überträgt, wobei das Datenpaket ein binäres Datenpaket ist, das Temperaturdaten enthält, wobei das Datenpaket durch Ein- und Ausschalten des ersten Schalters (924) übertragen wird, wobei bei dem Einschalten des ersten Schalters (924) das Spannungsniveau an der Plugsense-Leitung (918) abgesenkt wird,
ein Netzkabel (804), das Komponenten in dem Stecker (902, 904) einschließt, der an eine Stromquelle angeschlossen ist, wobei das Netzkabel (804) mit einer Ladestromkreis-Unterbrechungsvorrichtung (CCID) (802) kommuniziert und diese mit Strom versorgt,
einen zweiten Mikrocontroller (916), der so ausgebildet ist, dass er das Datenpaket von dem ersten Mikrocontroller (914) über die von einem zweiten Komparator (930) erfassten Spannungsänderungen in der Plugsense-Leitung (918) empfängt, wobei der zweite Mikrocontroller (916) so ausgebildet ist, dass er bestimmt, ob das Datenpaket, das Temperaturmesswerte von den vier Temperatursensoren (906, 908, 910, 912) enthält, einen Messwert von einem Temperatursensor (906, 908, 910, 912) enthält, der hängt oder offen ist, wenn der andere Temperatursensor (906, 908, 910, 912) des redundanten Temperatursensorpaares (906, 908, 910, 912) einen anderen Temperaturwert aufweist, wobei der zweite Mikrocontroller (916) so ausgebildet ist, dass er dann bestimmt, ob die Temperaturmesswerte über einem eingestellten Schwellenwert von 90 °C liegen, wobei er so ausgebildet ist, dass er einen Ladestrom reduziert, wenn die Temperaturmesswerte den eingestellten Schwellenwert überschreiten,
**dadurch gekennzeichnet, dass**
das System (100) so ausgebildet ist, dass es sich von einem Temperaturfehler erholt, wenn alle Temperatursensoren (906, 908, 910, 912) eine Temperatur unter 90 °C erfassen, wobei maximal 3 Temperaturfehler-Wiederherstellungen während einer Leistungssitzung erfolgen, nach denen die Wiederherstellung manuell erfolgt.

2. System nach Anspruch 1, weiter umfassend:
den zweiten Mikrocontroller (916), der so ausgebildet ist, dass er ein Statussignal erzeugt.

3. System nach Anspruch 2, weiter umfassend:
einen zweiten Schalter (926), der so ausgebildet ist, dass er das Statussignal von dem zweiten Mikrocontroller (916) empfängt.

4. System nach Anspruch 3, weiter umfassend:
einen ersten Komparator (928), der mit der PlugSense-Leitung (918) verbunden ist, wobei der erste Komparator (928) so ausgebildet ist, dass er das Statussignal von dem zweiten Schalter erfasst, wenn die Spannung in der PlugSense-Leitung (918) abgesenkt wird, wobei der zweite Schalter (926) ein- und ausgeschaltet wird, um das Binärsignal zu übertragen, wobei, wenn der zweite Schalter (926) eingeschaltet wird, das Spannungsniveau an der PlugSense-Leitung (918) abgesenkt wird.

5. System nach Anspruch 4, wobei der erste Komparator weiter so ausgebildet ist, dass er das Signal an den ersten Mikrocontroller (914) überträgt.

6. System nach Anspruch 5, weiter umfassend:
den zweiten Komparator (930), der mit der PlugSense-Leitung (918) verbunden ist, wobei der zweite Komparator (930) so ausgebildet ist, dass er das Datenpaket von dem ersten Schalter erfasst, wenn die Spannung in der PlugSense-Leitung (918) abgesenkt wird.

7. System nach Anspruch 6, wobei der zweite Komparator weiter so ausgebildet ist, dass er das Signal an den zweiten Mikrocontroller (916) überträgt.

8. System nach Anspruch 6, wobei das erste Paar redundanter Temperatursensoren (906 908), das zweite Paar redundanter Temperatursensoren (910, 912), der erste Mikrocontroller (914), der erste Schalter (924) und der erste Komparator (928) in dem Netzkabel angeordnet sind, und wobei der zweite Schalter (926) und der zweite Komparator (930) in der CCID angeordnet sind.

9. Verfahren für ein Wechselstrom-Steckersystem (100) nach den Ansprüchen 1 bis 8, umfassend:
Empfangen von Temperaturdaten von einem ersten Paar redundanter Temperatursensoren (906, 908) und einem zweiten Paar redundanter Temperatursensoren (910, 912) durch einen ersten Mikrocontroller (914), der mit einer Plugsense-Leitung (918) und einer Masseleitung (920) verbunden ist, wobei das erste Paar redundanter Temperatursensoren (906, 908) in der Nähe eines ersten Steckers (902) liegt, und wobei das zweite Paar redundanter Temperatursensoren (910, 912) in der Nähe eines zweiten Steckers (904) liegt;
Übertragen eines Datenpakets, das Temperaturdaten von dem ersten Paar redundanter Temperatursensoren (906, 908) und von dem zweiten Paar redundanter Temperatursensoren (910, 912) umfasst, durch den ersten Mikrocontroller (914) an einen ersten Schalter (924); und
Übertragen des empfangenen Datenpakets durch Absenken der Spannung in der Plugsense-Leitung (918) durch den ersten Schalter (924), wobei das Datenpaket ein binäres Datenpaket ist, das Temperaturdaten enthält, wobei das Datenpaket durch Ein- und Ausschalten des ersten Schalters (924) übertragen wird, wobei bei dem Einschalten des ersten Schalters (924) das Spannungsniveau an der Plugsense-Leitung (918) abgesenkt wird,
Empfangen des Datenpakets von dem ersten Mikrocontroller (914) durch einen zweiten Mikrocontroller (916) über die von einem zweiten Komparator (930) erfassten Spannungsänderungen in der Plugsense-Leitung (918),
Bestimmen durch den zweiten Mikrocontroller (916), ob das Datenpaket, das Temperaturmesswerte von den vier Temperatursensoren (906, 908, 910, 912) enthält, einen Messwert von einem Temperatursensor (906, 908, 910, 912) enthält, der hängt oder offen ist, wenn der andere Temperatursensor (906, 908, 910, 912) des redundanten Temperatursensorpaares (906, 908, 910, 912) einen anderen Temperaturwert aufweist, wobei der zweite Mikrocontroller (916) dann bestimmt, ob die Temperaturmesswerte über einem eingestellten Schwellenwert von 90 °C liegen,
Reduzieren eines Ladestroms durch den zweiten Mikrocontroller (916), wenn die Temperaturmesswerte den eingestellten Schwellenwert überschreiten,
**gekennzeichnet durch,**
das Wiederherstellen nach einem Temperaturfehler, wenn alle Temperatursensoren (906, 908, 910, 912) eine Temperatur unter 90 °C erfassen, wobei maximal 3 Temperaturfehler-Wiederherstellungen während einer Leistungssitzung erfolgen, nach denen die Wiederherstellung manuell erfolgt.

10. Verfahren nach Anspruch 9, weiter umfassend:
Erzeugen eines Statussignals durch den zweiten Mikrocontroller (916).

11. Verfahren nach Anspruch 10, weiter umfassend:
Empfangen des erzeugten Statussignals von dem zweiten Mikrocontroller (916) durch einen zweiten Schalter (926).

12. Verfahren nach Anspruch 11, weiter umfassend:
Erfassen des Statussignals von dem zweiten Schalter, wenn die Spannung in der Plugsense-Leitung (918) abgesenkt wird, durch einen ersten Komparator (928), der mit der Plugsense-Leitung (918) verbunden ist, wobei der zweite Schalter (926) ein- und ausgeschaltet wird, um das Binärsignal zu übertragen, wobei, wenn der zweite Schalter (926) eingeschaltet wird, das Spannungsniveau an der Plugsense-Leitung (918) abgesenkt wird.

13. Verfahren nach Anspruch 12, weiter umfassend:
Übertragen des erfassten Signals durch den ersten Komparator an den ersten Mikrocontroller (914).

14. Verfahren nach Anspruch 9, weiter umfassend:
Übertragen des erfassten Signals durch den zweiten Komparator an den zweiten Mikrocontroller (916).

## Revendications

1. Système (100) de fiche CA comprenant :
une première paire de capteurs (906, 908) de température redondants à proximité d'une première fiche (902) ;
une deuxième paire de capteurs (910, 912) de température redondants à proximité d'une deuxième fiche (904) ;
un premier microcontrôleur (914) relié à une ligne (918) de détection de fiche et à une ligne (920) de mise à la terre, dans lequel le premier microcontrôleur (914) est configuré pour recevoir des données de température de la première paire de capteurs (906, 908) de température redondants et de la deuxième paire de capteurs (910, 912) de température redondants ; et
un premier commutateur (924) configuré pour recevoir un paquet de données comprenant des données de température provenant de la première paire de capteurs (906, 908) de température redondants et de la deuxième paire de capteurs (910, 912) de température redondants, dans lequel le premier commutateur transmet le paquet de données en abaissant la tension dans la ligne (918) de détection de fiche, dans lequel le paquet de données est un paquet de données binaire contenant des données de température, dans lequel le paquet de données est transmis en activant et en désactivant le premier commutateur (924), dans lequel lorsque le premier commutateur (924) est activé, le niveau de tension au niveau de la ligne de détection de fiche (918) est abaissé,
un cordon de réseau (804) qui inclut des composants dans la fiche (902, 904) qui est fixée à une source d'alimentation, dans lequel le cordon de réseau (804) est en communication avec un dispositif (802) d'interruption de circuit de charge (CCID) et fournit une alimentation à celui-ci,
un deuxième microcontrôleur (916) étant configuré pour recevoir le paquet de données du premier microcontrôleur (914) par le biais des changements de tension détectés dans la ligne (918) de détection de fiche par un deuxième comparateur (930), dans lequel le deuxième microcontrôleur (916) est configuré pour déterminer si le paquet de données contenant des lectures de température à partir des quatre capteurs (906, 908, 910, 912) de température contient une lecture à partir d'un capteur (906, 908, 910, 912) de température qui est bloqué ou ouvert si l'autre capteur (906, 908, 910, 912) de température de la paire de capteurs (906, 908, 910, 912) de température redondants présente une lecture de température différente, dans lequel le deuxième microcontrôleur (916) est configuré pour déterminer alors si les lectures de température sont supérieures à un seuil défini de 90 °C, étant configuré pour réduire un courant de charge, si les lectures de température dépassent le seuil défini,
**caractérisé en ce que**
le système (100) étant configuré pour récupérer d'un défaut de température lorsque tous les capteurs (906, 908, 910, 912) de température détectent une température inférieure à 90 °C, dans lequel un maximum de 3 récupérations de défaut de température se produisent pendant une session de mise sous tension après laquelle la récupération se produit manuellement.

2. Système selon la revendication 1, comprenant en outre :
le deuxième microcontrôleur (916) configuré pour générer un signal d'état.

3. Système selon la revendication 2, comprenant en outre :
un deuxième commutateur (926) configuré pour recevoir le signal d'état du deuxième microcontrôleur (916).

4. Système selon la revendication 3, comprenant en outre :
un premier comparateur (928) relié à la ligne (918) de détection de fiche, dans lequel le premier comparateur (928) est configuré pour détecter le signal d'état du deuxième commutateur lorsque la tension dans la ligne (918) de détection de fiche est abaissée, dans lequel le deuxième commutateur (926) s'active et se désactive pour transmettre le signal binaire, dans lequel lorsque le deuxième commutateur (926) est activé, le niveau de tension au niveau de la ligne (918) de détection de fiche est abaissé.

5. Système selon la revendication 4, dans lequel le premier comparateur est en outre configuré pour transmettre le signal au premier microcontrôleur (914).

6. Système selon la revendication 5, comprenant en outre :
le deuxième comparateur (930) relié à la ligne (918) de détection de fiche, dans lequel le deuxième comparateur (930) est configuré pour détecter le paquet de données du premier commutateur lorsque la tension dans la ligne (918) de détection de fiche est abaissée.

7. Système selon la revendication 6, dans lequel le deuxième comparateur est en outre configuré pour transmettre le signal au deuxième microcontrôleur (916).

8. Système selon la revendication 6, dans lequel la première paire de capteurs (906, 908) de température redondants, la deuxième paire de capteurs (910, 912) de température redondants, le premier microcontrôleur (914), le premier commutateur (924), et le premier comparateur (928) sont disposés dans le câble de réseau, et dans lequel le deuxième commutateur (926) et le deuxième comparateur (930) sont disposés dans le CCID.

9. Procédé pour un système (100) de fiche CA selon les revendications 1 à 8 comprenant :
la réception, par un premier microcontrôleur (914) relié à une ligne (918) de détection de fiche et à une ligne (920) de mise à la terre, de données de température provenant d'une première paire de capteurs (906, 908) de température redondants et d'une deuxième paire de capteurs (910, 912) de température redondants, dans lequel la première paire de capteurs (906, 908) de température redondants se situent à proximité d'une première fiche (902), et
dans lequel la deuxième paire de capteurs (910, 912) de température redondants se situent à proximité d'une deuxième fiche (904) ;
la transmission, par le premier microcontrôleur (914), d'un paquet de données comprenant des données de température de la première paire de capteurs (906, 908) de température redondants et de la deuxième paire de capteurs (910, 912) de température redondants à un premier commutateur (924) ; et
la transmission, par le premier commutateur (924), du paquet de données reçu en abaissant la tension dans la ligne (918) de détection de fiche, dans lequel le paquet de données est un paquet de données binaire contenant des données de température, dans lequel le paquet de données est transmis en activant et en désactivant le premier commutateur (924), dans lequel lorsque le premier commutateur (924) est activé, le niveau de tension au niveau de la ligne (918) de détection de fiche est abaissé,
la réception par un deuxième microcontrôleur (916) du paquet de données du premier microcontrôleur (914) par le biais des changements de tension détectés dans la ligne (918) de détection de fiche par un deuxième comparateur (930),
le fait de déterminer, par le deuxième microcontrôleur (916), si le paquet de données contenant des lectures de température provenant des quatre capteurs (906, 908, 910, 912) de température contient une lecture provenant d'un capteur (906, 908, 910, 912) de température qui est bloqué ou ouvert si l'autre capteur (906, 908, 910, 912) de température de la paire de capteurs (906, 908, 910, 912) de température redondants présente une lecture de température différente, dans lequel le deuxième microcontrôleur (916) détermine alors si les lectures de température se situent au-dessus d'un seuil défini de 90 °C,
la réduction par le deuxième microcontrôleur (916) d'un courant de charge, si les lectures de température dépassent la valeur seuil définie,
**caractérisé par,**
le rétablissement après un défaut de température lorsque tous les capteurs (906, 908, 910, 912) de température détectent une température inférieure à 90 °C, dans lequel un maximum de 3 récupérations de défaut de température se produisent pendant une session de mise sous tension après laquelle la récupération se produit manuellement.

10. Procédé selon la revendication 9, comprenant en outre :
la génération, par le deuxième microcontrôleur (916), d'un signal d'état.

11. Procédé selon la revendication 10, comprenant en outre :
la réception, par un deuxième commutateur (926), du signal d'état généré par le deuxième microcontrôleur (916).

12. Procédé selon la revendication 11, comprenant en outre :
la détection, par un premier comparateur (928) relié à la ligne (918) de détection de fiche, du signal d'état du deuxième commutateur lorsque la tension dans la ligne (918) de détection de fiche est abaissée, dans lequel le deuxième commutateur (926) s'active et se désactive pour transmettre le signal binaire, dans lequel lorsque le deuxième commutateur (926) est activé, le niveau de tension au niveau de la ligne (918) de détection de fiche est abaissé.

13. Procédé selon la revendication 12, comprenant en outre :
la transmission, par le premier comparateur, du signal détecté au premier microcontrôleur (914).

14. Procédé selon la revendication 9, comprenant en outre :
la transmission, par le deuxième comparateur, du signal détecté au deuxième microcontrôleur (916).
